# EUROPEAN PATENT APPLICATION

(11) **EP 4 650 133 A1**
(43) Date of publication of application: **19.11.2025**
(21) Application number: 25168730.7
(22) Date of filing: 07.04.2025
(51) Int. Cl.: B29B 17/00, B29B 17/04, B29B 17/02, B29L 31/00, B29K 33/00

(54) **METHOD FOR RECYCLING SANITARY FIXTURES AND BYPRODUCTS DERIVED FROM THE LIFE CYCLE OF SUCH SANITARY FIXTURES, AND INDUSTRIAL PLANT FOR PERFORMING THE METHOD**

(30) Priority: 14.05.2024 IT 202400010765
(71) Applicant: Elleci S.p.A., 04014 Pontinia, Z.I. Mazzocchio LT (IT)
(72) Inventor: TRAVERSA, Graziano, 04019 TERRACINA LT (IT); TRAVERSA, Giancarlo, 04019 TERRACINA LT (IT)
(74) Representative: Modiano, Micaela Nadia

(57) **Abstract**

A method (100) for recycling sanitary fixtures and byproducts derived from the life cycle of sanitary fixtures, comprising: obtaining (10) particles of one or more byproducts (12, 14, 16, 18, 32, 34, 36, 38) derived from the life cycle of a first sanitary fixture, the particles being made at least in part of hardened thermosetting resin; screening (50) the particles by using only a single screen, so as to generate particulate matter (52) having a size smaller than a desired value; mixing (60) the particulate matter with a reaction soup for a second sanitary fixture, so as to generate a mixture comprising the particulate matter (52) and the reaction soup; and producing the second sanitary fixture by using the mixture.

## Description

The present invention relates to a method for recycling sanitary fixtures (in short: "fixtures") and byproducts deriving from the life cycle of said fixtures. Moreover, the invention relates to an industrial plant for performing the method.

The method and the industrial plant according to the invention are particularly, but not exclusively, useful and practical for recycling sanitary fixtures and byproducts of the production of sanitary fixtures such as, for example, sinks, washbasins, tubs or the like.

In the context of the invention, the term "byproduct" denotes any processing product (and/or any sanitary fixture) that can be classified as waste, particularly of an industrial nature.

Moreover, the term "thermoplastic" denotes a material that can be melted and reshaped multiple times without undergoing permanent alterations to its chemical properties. Typically, a thermoplastic material softens when heated and hardens when cooled, but keeps its chemical characteristics unchanged both during heating and during cooling. Examples of thermoplastic materials are polyethylene (PE), polypropylene (PP) and polyvinyl chloride (PVC).

Also in the context of the invention, the expression "thermosetting" denotes a material which, when heated in a so-called "hardening" process, hardens irreversibly, due to a chemical reaction that creates permanent three-dimensional lattices within the molecular structure of the material itself. Examples of thermosetting materials are acrylic resins (also known as "hardening resins").

As is known, some modern sanitary fixtures are produced by molding, starting from a mass (or "working compound") that contains a matrix (or "reaction soup") and a filling material (or "filler"). Typically, after being molded, each of these known sanitary fixtures is first processed and then subjected to quality checks. If these quality controls yield a negative result, the sanitary fixture in question is identified (or classified) as a byproduct or residue (since it represents an unwanted or unusable fraction generated as a result of a production process) and is subsequently managed as industrial waste.

In the sanitary fixtures mentioned above, the filler mostly comprises minerals (for example, between 50-85% silica in various crystalline forms such as quartz, cristobalite or glass) that can be conveniently dyed and silanized to improve both the aesthetic appearance and the durability of the product, as well as the anchoring of said filler to the reaction soup. The matrix, on the other hand, is made of hard plastic, obtained from the hardening of a thermosetting resin, preferably an acrylic one.

Despite advantages such as, for example, having superior mechanical performance compared to thermoplastic matrices, matrices obtained by hardening thermosetting resin are not without drawbacks, including the fact that they are more difficult to recycle. Consequently, while sanitary fixtures made with a thermoplastic matrix can be easily reshaped and reused several times (through appropriate heating and cooling sequences), recycling sanitary fixtures that have been provided by using a thermosetting resin is a difficult task.

To improve the recyclability of well-known sanitary fixtures with a thermosetting matrix, the reaction soup is usually additized with polymethyl methacrylate (PMMA), a thermoplastic polymer obtained from the polymerization of acrylic monomers, for example monomers of methacrylic acid (MMA). However, PMMA is very expensive. Typically, a quality PMMA costs more than 40% with respect to the initial MMA monomers. Moreover, the production of PMMA has a negative impact on carbon dioxide (CO₂) emissions.

Therefore, further contributions are needed in the technological field of sanitary fixture production.

The aim of the present invention is to overcome the aforementioned limitations of the background art by devising a method that allows more versatile and practical recycling of sanitary fixtures and byproducts resulting from the life cycle of such sanitary fixtures.

Within this aim, an object of the present invention is to manufacture sanitary fixtures in a more environmentally sustainable manner.

Another object of the invention is to reduce production costs and the CO₂ emissions necessary to produce sanitary fixtures.

A further object of the invention is to recycle, in a simple, effective and environmentally sustainable manner, sanitary fixtures and byproducts which comprise hardened thermosetting resin.

Not the least object of the present invention is to implement a method for recycling sanitary fixtures and associated byproducts that is highly reliable, relatively simple to provide and economically competitive when compared to the background art.

This aim, as well as these and other objects that will become more apparent hereinafter, are achieved by a method according to claim 1.

The intended aim and objects are also achieved by an industrial plant according to claim 10.

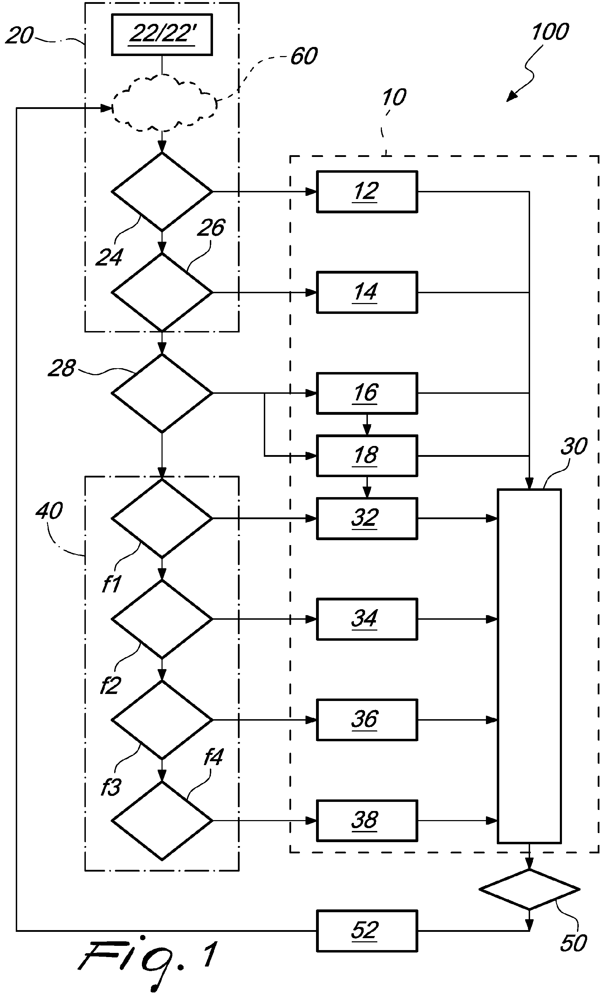

Further characteristics and advantages of the present invention will become more apparent from the description of a preferred but not exclusive embodiment of the method according to the invention, illustrated by way of non-limiting example with the aid of the accompanying drawings, wherein Figure 1 is a block diagram of the method according to the invention.

With reference to the figures, the method according to the present invention, generally designated by the reference numeral 100, comprises a step 10 that consists in obtaining particles of one or more byproducts derived from the life cycle of a first sanitary fixture. These specific particles are made at least in part of hardened thermosetting resin.

Such particles can be obtained during a production step 20.

In particular, the production step 20 entails the generation of byproducts that are classified as waste to be disposed of. The same situation can occur along a distribution chain of the sanitary fixture manufactured in production step 20 (for example, along a distribution chain of the first sanitary fixture) and, in an extreme case, also at the end of the life cycle of the sanitary fixture itself.

Preferably, the resin that forms at least part of said particles is acrylic resin.

In some preferred embodiments, at least part of said particles is obtained during production step 20 of the first sanitary fixture.

In particular, at least part of said particles is obtained as disposal of a residual compound 12.

The generation of the residual compound 12 is an inevitable consequence of the needs of a market that requires the production of sanitary fixtures having different shapes and/or colors (therefore requiring production methods capable of providing, respectively, high flexibility in mold changes and/or a wide range of colors). Typically, the residual compound 12 is formed inside one or more injectors of an industrial plant (or equivalent apparatus) for the production of sanitary fixtures according to the invention.

In addition or as an alternative, at least part of said particles can be obtained as a byproduct 14 of an extraction 26 of the first sanitary fixture from a mold.

In particular, the mold is a reaction mold shaped to reproduce a specific sanitary fixture (such as, for example, the first sanitary fixture). Preferably, the reaction mold is of the preheated type.

In practice, the residual compound 12 is excess material from a preparation 22 that is injected into the reaction mold during an injection step 24.

In particular, the preparation 22 (and consequently the residual compound 12) is essentially composed of acrylic resin (as a matrix) and reinforcing material (as a filler), with the addition of radical initiators. However, the chemical composition of the preparation 22 can be conveniently varied according to market demands.

Usually, the residual compound 12 is removed from each injector when it is necessary to change the color and/or mold of the sanitary fixtures to be produced. Moreover, the residual compound 12 can be classified as industrial waste.

Therefore, the residual compound 12 constitutes a production byproduct of the first sanitary fixture.

Further production byproducts (such as, for example, small parts 14 of a sanitary fixture) can be obtained from the extraction 26 of the first sanitary fixture from the mold.

Preferably, extraction 26 is performed when a catalysis step inside the sanitary fixture present in the mold is finished. During the catalysis step, the residual compound 12 is catalysed.

In addition or as an alternative, at least part of such particles can be obtained from one or more treatments 28 of the first sanitary fixture.

In particular, at least part of such particles can be obtained during a cutting step, in which the excess parts of the first sanitary fixture are deflashed.

In addition or as an alternative, at least part of such particles can be obtained during a drilling step, in which one or more housing holes are provided for a drain, for external scoops and/or for connecting elements such as, for example, hooks or bolts.

In practice, at least part of such particles can be obtained from treatment scraps 18 such as, for example, trimming scraps and/or drilling scraps.

In addition or as an alternative, at least part of such particles can be obtained by capturing process powders 16.

Such process powders 16 can be generated during treatments such as those discussed.

In particular, the process powders 16 can be generated during deflashing/drilling (or, more generally, during a cutting operation) of the first sanitary fixture. In other words, the process powders can be captured powders of a deflashing/drilling department of an industrial plant such as the one mentioned above.

In addition or as an alternative, the process powders 16 can be generated during a finishing of the first sanitary fixture.

In practice, the process powders 16 are generated when a sharp and/or abrasive body mechanically interacts with one or more surfaces of the first sanitary fixture, causing particles to detach from such one or more surfaces. Examples of cutting and/or abrasive bodies are diamond discs, milling cutters, or water jet cutting means. Preferably, at least one of such cutting bodies forms an integral part of the aforementioned plant/apparatus.

Typically, the process powders 16 have a size of less than 500 microns.

In some embodiments, capture of the process powders 16 takes place by suction, by means of a special suction system (which can also be integrated into the aforementioned plant/apparatus). However, more complex (but more energy-intensive) embodiments are also conceivable in which the process powders 16 are obtained by separating powdery residues from a liquid component of processing sludge (such as, for example, the sludge produced during water jet cutting).

In addition or as an alternative, at least part of such particles can be obtained by shredding the first sanitary fixture and/or byproducts deriving from the life cycle of the first sanitary fixture (see Figure 1, reference numeral 30).

In particular, the first sanitary fixture is shredded inside an adapted shredder (described in greater detail below) of the aforementioned plant/apparatus.

Preferably, the first sanitary item is shredded after it has been identified/classified as waste (i.e., as a byproduct). In Figure 1, such identification/classification is designated by the reference numeral 40.

Identification/classification 40 can occur during at least one of the following steps f1-f4 of the life cycle of the first sanitary item:
f1) quality control (or classification);
f2) storage in warehouse;
f3) distribution (comprising both commercialization and any return/recall of the first sanitary fixture from sales channels);
f4) end of useful life.

In particular, the first sanitary fixture is identifiable/classifiable as a byproduct when it corresponds to one or more of the following: an object 32 that does not comply with one or more quality requirements (for example, due to production errors or defects and/or treatment errors/defects); an item of leftover stock 34; a return item 36 (that is, a sanitary fixture returned or recalled from sales channels, for example due to faults, errors or defects such as those already mentioned); a product 38 that has reached the end of its useful life.

In practice, the byproducts deriving from the life cycle of the first sanitary fixture can be selected from (or all of) the following: the residual compound 12; the sanitary fixture parts 14; the process powders 16; the treatment scraps 18; the entire sanitary fixture when identified as waste (as in the case of the objects/products/fixtures 32, 34, 36 and 38).

Advantageously, each byproduct can be classified by color, so as to facilitate its reintegration into the production process.

In each embodiment, such particles are screened so as to generate particulate matter 52 having dimensions smaller than a desired value. In other words, each method according to the invention comprises a screening step 50, designed to give the particulate matter 52 a target particle size.

In some preferred embodiments, the desired value is (approximately) 800 microns.

More preferably, the desired value is (approximately) 500 microns.

The use of particulate matter 52 with a size less than (approximately) 500 microns is particularly useful and practical for speeding up the recovery of the byproduct within the production flow.

Preferably, the screening step 50 takes place after grinding the material that had been already shredded in step 30.

In particular, the shredded material is inserted into a pulverization device of a known type (for example, a blade and/or hammer grinding device).

In practice, the pulverization device can comprise one or more of the mills described in greater detail hereinafter.

Advantageously, the pulverization device is configured to generate a particulate matter in which the size of each particle is smaller than the desired value. When the desired value is (approximately) 500 microns, the pulverization device allows to obtain particularly beneficial effects in terms of grinding speed.

In practice, pulverization/grinding devices set to obtain particulate matter with dimensions smaller than 500 microns offer a working speed of approximately 600 kg/h, with sustainable energy consumption in terms of CO₂ emissions.

Preferably, the pulverization device is integrated in the aforementioned plant/apparatus.

In particular, the pulverization device may be comprised in the aforementioned shredder, or it may constitute a separate device.

In each method according to the invention, screening 50 is performed by using only a single screen. In other words, the screen used in the production process is one and only one. Consequently, each embodiment provides for the use of a single screen.

Preferably, the single screen is an integral part of the aforementioned plant/apparatus.

As is known, a screen is designed to allow only particles smaller than the desired value to pass through its holes.

In practice, during screening, the screen only allows particulate matter 52 with a size below the desired value to pass through.

Particles that do not pass the screening step 50 (i.e., particles larger than the desired value) can be automatically fed into one or more regrinding cycles in order to reduce the size of these particles until they reach the desired value. Each regrinding cycle can be carried out by the aforementioned pulverization device. However, embodiments are also conceivable in which the pulverization/grinding device has a process yield of 99.99%, thus avoiding the need for regrinding cycles.

Preferably, the single screen is designed to be crossed by particulate matter consisting essentially of particles smaller than 500 microns.

In particular, the screen can generate particulate matter composed of 95% particles smaller than 200 microns, 4% particles larger than 200 microns, and 1% particles (slightly) larger than 500 microns.

Managing particulate matter essentially constituted by particles smaller than 500 microns facilitates the possibility of recycling the particulate matter in a standardized manner.

In each embodiment, the particulate matter 52 (i.e., the particulate matter smaller than the desired value) is mixed with a reaction soup for a second sanitary fixture (see Figure 1, reference numeral 60).

The reaction soup for the second sanitary fixture also contains thermosetting resin particles, preferably of the same type as those obtained from one or more byproducts of the life cycle of the first sanitary fixture.

In particular, the reaction soup for the second sanitary fixture also contains particles made at least in part of acrylic resin.

The second sanitary fixture can be of a different, similar or identical type with respect to the first sanitary fixture. For example, if the first sanitary fixture is a sink, the second sanitary fixture can be a bidet, a tub or another sink. Preferably, the second sanitary fixture and the first sanitary fixture have at least one aesthetic/visible aspect in common.

In practice, in Figure 1, mixing 60 entails the merging between the particulate matter 52 and an additional preparation 22'. In a manner similar to the preparation 22, this additional preparation 22' also is intended to be injected into a suitable reaction mold. However, while the preparation 22 is intended for the production of the first sanitary fixture, the additional preparation 22' is intended for the production of the second sanitary fixture.

Therefore, mixing 60 allows to recycle in the second sanitary fixture the particulate matter 52 obtained from the first sanitary fixture.

In particular, mixing 60 takes place inside a dissolver, in which the particulate matter 52 is mixed with the reaction soup for the second sanitary fixture.

Preferably, the dissolver is a high-speed dissolver (for example, a dissolver with a rotation rate higher than 300 rpm).

Using a high-speed dissolver such as the one discussed above is particularly advantageous when the particulate matter has a reduced target particle size (i.e., when the particulate matter 52 is essentially constituted by particles smaller than 500 microns). Under these conditions, the time necessary to obtain a uniform mixture of particulate matter 52 and reaction soup for the second sanitary fixture can be significantly reduced, to the point of lasting from approximately 5 to approximately 10 minutes. This aspect is particularly important, considering that:
a. a hardened thermosetting resin cannot be completely regenerated;
b. by mixing a reaction soup with particles that comprise hardened thermosetting resin, a mixture is obtained that undergoes a swelling process (generated by the monomers present in this same mixture);
c. the mixture referenced in point b. can be used to mold the second sanitary fixture only when the swelling process is complete; and
d. usually, a shredded composite having a particle size distribution with dimensions greater than the values mentioned above takes about 24 hours to complete the swelling process.

Preferably, the dissolver is integrated into the aforementioned plant/apparatus.

In particular, the dissolver can either be part of the aforementioned shredder or constitute a separate device.

In practice, in the aforementioned plant/apparatus, the assembly constituted by the mold and the injector(s) constitutes a molding system configured to produce the second sanitary fixture by using the mixture produced by the dissolver.

The shredder can be designed to shred any type of byproduct.

In some variations, the shredder can be fed with products of a reduced piece size (for example, pieces of about 10 cm per side). In more advanced variations, the shredder can also be fed with larger products such as, for example, whole sanitary fixtures.

Preferably, the shredder is positioned at the head of the industrial plant.

Moreover, the shredder can advantageously comprise (or be associated with) one, several or all of the following:
- a conveyor belt, adapted to convey each byproduct/sanitary fixture that needs to be shredded toward a shredding area;
- a dust removal filter (particularly useful for performing the shredding 30 safely);
- a first mill (of the "impact" type), designed to reduce the size of each byproduct/sanitary fixture to be shredded;
- a second mill, designed to further reduce the size of the byproducts/sanitary fixtures shredded by the first mill;
- a micro-mill, designed to pulverize each byproduct/sanitary fixture previously shredded by the first mill and/or the second mill;
- one or more hoppers, designed to supply each byproduct/sanitary fixture to a respective mill from among those mentioned above;
- one or more bucket elevators, designed to move each byproduct/sanitary fixture toward a respective hopper among those mentioned above;
- one or more screw feeders, adapted to convey each byproduct/sanitary fixture from one of the mills to another one of the mills;
- a vibrating feeder, adapted to modulate a workflow in/of the shredder (in particular, supplying each byproduct/sanitary fixture to a respective mill or to a respective hopper among those mentioned above);
- one or more process filters, adapted to standardize the products leaving the shredder;
- a ventilation system, functionally connected to each process filter;
- one or more collection tanks, adapted to collect the products leaving the shredder;
- one or more dosing screws, adapted to unload the products leaving the shredder into the respective collection tank(s); and
- one or more rotary valves, adapted to expel each of the products leaving the shredder at regular intervals and convey the product into the respective dosing screw(s).

Preferably, the micro-mill is designed to generate the particulate matter 52 (i.e., the particulate matter having the target particle size).

As mentioned, the particulate matter 52 can be introduced in the dissolver together with the reaction soup and, after a few minutes of mixing, can be used in the production cycle of the second sanitary fixture.

Since the reaction soup for the second sanitary fixture also has thermosetting resin particles, the particulate matter 52 is much more compatible than a virgin filler.

A compatibilizing agent, in particular belonging to the silane family, may also be present in the mixture of the particulate matter 52 and the reaction soup for the second sanitary fixture. An example of a compatibilizing agent that is particularly useful and practical for this type of application is so-called "MEMO" (i.e., 3-methacryloxyloxypropyltrimethoxysilane - CAS 2530-85-0).

In each embodiment, the second sanitary fixture is produced by using the mixture (i.e., the mixture comprising the particulate matter 52 and the reaction soup for the second sanitary fixture).

In particular, the second sanitary fixture is produced by molding.

In practice, the second sanitary fixture is produced by using a processing compound in which a proportion of recycled material is present.

Preferably, the processing compound comprises PMMA dissolved in acrylic monomer(s), for example MMA.

Depending on the type of sanitary fixture to be produced, the proportion of recycled material can constitute from 1% to 70%, preferably from 2% to 60%, and more preferably from 3% to 40%, of the processing compound.

In particular, for formulations where there is the need to include a small amount of fine filler (i.e., a small amount of fine material) the percentage of recycled material will be lower; on the contrary, materials composed of fine fillers will see this percentage increase while remaining within the maximum limits given above.

Moreover, by increasing the proportion of recycled material, the use of PMMA can be significantly reduced (up to 50% less weight compared to the amount of PMMA typically used in processing compounds that do not contain recycled filler), with the addition of small amounts of MMA (up to 16% more weight compared to the amount of MMA typically used in processing compounds that do not contain recycled filler). In this way, use of the recycled material allows considerable savings in the purchase/use of a processed product such as PMMA, thus significantly reducing both costs and CO₂ emissions deriving from the production of the second sanitary fixture.

In practice it has been found that the method and the industrial plant according to the present invention fully achieve the intended aim and objects, since they allow to overcome the limitations of the background art that have been explained above.

Specifically, the invention allows to maximize the recycling of a specific sanitary fixture, as well as any byproduct deriving from the life cycle of that specific sanitary fixture.

In practice, the invention allows to establish a circular economy that can reintegrate into the production flow all the byproducts deriving from the life cycle of the sanitary fixture in question (including those byproducts that due to the chemical-physical properties of thermosetting materials would be difficult to recycle in another way). Moreover, by virtue of the reintegration of the byproducts, the invention allows to reduce purchases of virgin material, production costs and overall CO₂ emissions.

The invention thus conceived is susceptible of numerous modifications and variations, all of which are within the scope of the accompanying claims. For example, it is possible to provide for separate collection by color of the process powders 16 and/or of the particulate matter 52, to be discharged in each instance into special collection tanks.

Unless otherwise specified, the various embodiments described above can be combined to provide further and/or alternative embodiments. For example, the industrial plant according to the invention may comprise one, more or all of the components/devices described above.

Moreover, all the details may be replaced with other technically equivalent elements.

In practice, the materials used, so long as they are compatible with the specific use, as well as the contingent shapes and dimensions, may be any according to the requirements and the state of the art.

The disclosures in Italian Patent Application No. 102024000010765 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method (100) for recycling sanitary fixtures and byproducts derived from the life cycle of said sanitary fixtures, comprising:
obtaining (10) particles of one or more byproducts (12, 14, 16, 18, 32, 34, 36, 38) derived from the life cycle of a first sanitary fixture, said particles being made at least in part of hardened thermosetting resin;
screening (50) said particles by using only a single screen, so as to generate particulate matter (52) having a size smaller than a desired value;
mixing (60) said particulate matter (52) with a reaction soup for a second sanitary fixture, so as to generate a mixture comprising said particulate matter (52) and said reaction soup; and
producing said second sanitary fixture using said mixture.

2. The method (100) according to claim 1, wherein at least part of said particles is obtained during a production step (20) of said first sanitary fixture.

3. The method (100) according to claim 2, wherein at least part of said particles is obtained as disposal of a residual compound (12).

4. The method (100) according to claim 2 or 3, wherein at least part of said particles is obtained by extracting (26) said first sanitary fixture from a mold.

5. The method (100) according to any one of the preceding claims, wherein at least part of said particles is obtained from one or more treatments (28) of said first sanitary fixture, in particular from deflashing and/or drilling scraps (18).

6. The method (100) according to any one of the preceding claims, wherein at least part of said particles is obtained by capturing process powders (16).

7. The method (100) according to any one of the preceding claims, wherein at least part of said particles is obtained by shredding (30) said first sanitary fixture, preferably after identifying (40) said first sanitary fixture as waste.

8. The method (100) according to any one of the preceding claims, wherein said desired value is approximately 800 microns or approximately 500 microns.

9. The method (100) according to any one of the preceding claims, wherein said thermosetting resin is acrylic resin.

10. An industrial plant for performing a method (100) according to any one of the preceding claims, comprising:
a single screen, configured to generate (50) the particulate matter (52) having a size smaller than the desired value;
a dissolver, configured to mix (60) the particulate matter (52) with the reaction soup for the second sanitary fixture; and
a molding system, configured to produce said second sanitary fixture using the mixture produced by said dissolver.
